## Europäisches Patentamt

## European Patent Office

## Office européen des brevets

(19)

(11) Veröffentlichungsnummer : **0 190 236
B1**

(12) **EUROPÄISCHE PATENTSCHRIFT**

(45) Veröffentlichungstag der Patentschrift :
**10.02.88**

(21) Anmeldenummer : **85903820.0**

(22) Anmeldetag : **18.07.85**

(86) Internationale Anmeldenummer :
**PCT/EP 85/00356**

(87) Internationale Veröffentlichungsnummer :
**WO/8600873 (13.02.86 Gazette 86/04)**

(51) Int. Cl.⁴ : **B 65 G 67/60**

(54) BEWEGLICHES BECHERWERK FÜR SCHÜTTGÜTER.

(30) Priorität : **24.07.84 DE 3427170**

(43) Veröffentlichungstag der Anmeldung :
**13.08.86 Patentblatt 86/33**

(45) Bekanntmachung des Hinweises auf die Patenterteilung : **10.02.88 Patentblatt 88/06**

(84) Benannte Vertragsstaaten :
**AT BE CH DE FR GB IT LI LU NL SE**

(56) Entgegenhaltungen :
**DE-A- 2 123 249
DE-A- 2 210 311
DE-A- 3 043 448**

(73) Patentinhaber : **PHB Weserhütte AG
Pohligstrasse 1
D-5000 Köln 51 (DE)**

(72) Erfinder : **EISOLD, Horst
Albert-Weisgerber-Allee 71
D-6670 St. Ingbert (DE)**

## Beschreibung

Die Erfindung betrifft ein bewegliches Becherwerk zur senkrechten oder geneigten Aufnahme und Förderung von Schüttgütern aus Schiffen oder von Lagerplätzen, mit einer Tragkonstruktion für die Umlenkscheiben der die umlaufenden Becher tragenden Ketten, wobei die Becher das Schüttgut während einer Vorschubbewegung der Tragkonstruktion aufnehmen sowie mit einer drehantreibbar an der Tragkonstruktion gelagerten, radial gerichtete Schaufeln aufweisenden Schneideinrichtung.

Zur Aufnahme des Schüttgutes werden die bekannten beweglichen Becherwerke in das Schüttgut eingetaucht und dann in der Vorschubrichtung quer zur Becher-Laufrichtung bewegt. In diesem Falle kommt den Bechern eine stark schneidende Funktion zu. Da die Schneid- und Vorschubkräfte über die Becher und die Kettenführungen voll auf die Tragkonstruktion des Becherwerkes und die Umlenkscheiben der Ketten übertragen werden, ist ein Verschleiß der Becher, Ketten, Führungen und Umlenkscheiben unvermeidlich. Daher werden solche Becherwerke robust ausgeführt, was aber zu großen Eigengewichten führt, die insbesondere dann nachteilig sind, wenn das Becherwerk an der Auslegerspitze einer Schiffs-Entladevorrichtung angehängt ist. Im überigen hat der Verschleiß Betriebsunterbrechungen und Ersatzteilbedarf zur Folge, wodurch die Betriebs- und Wartungskosten ansteigen, die Nutzungsdauer sinkt und dementsprechend die Liegekosten von Schiffen wachsen.

Die DE-A-3 043 448 offenbart einen Schiffsentlader für Schüttgut mit einem beweglichen Becherwerk wie es im gattungsbildenden Teil des ersten Anspruches beschrieben ist. Im unteren Bereich der Tragkonstruktion sind zwei einander gegenüberliegende Schürfflügel mit radial gerichteten Schaufeln angeordnet, die das Material anschneiden und dem Becherwerk zuführen. Infolge dieser Anordnung wird nicht nur die radiale Abmessung des gesamten Aufnahmekopfes vergrößert, sondern darüberhinaus auch nur eine unzureichende Leit- bzw. Anschneidfunktion ausgeübt. Bei angebackenem Material kann es leicht geschehen, daß, infolge der nicht unerheblichen radialen Erstreckung der ansonsten ungeschützten Schürfflügel, diese aufgrund der hohen Kräfte abreißen. Ferner nachteilig ist zu bemerken, daß die Becher sowohl beim Abwärts- als auch beim Aufwärtsgang mit dem Material in Berührung stehen, so daß evtl. durch die Schürfflügel gelöste größere Brocken festgebackenem Schüttgutes diese zu Beschädigungen an den Bechern führen können.

Der Erfindung liegt die Aufgabe zugrunde, eine funktionelle Trennung zwischen Schneid- und Aufnahmevorgang zu erzielen, wobei eine kompakte Bauweise des Schneid-/Aufnahmebereiches und gleichzeitig eine gute Vorzerkleinerung ggf. festgebackener Schüttgüter gewährleistet werden kann.

Diese Aufgabe wird erfindungsgemäß dadurch gelöst, daß das untere Aufnahmeende der Tragkonstruktion mit einem feststehenden zylindrischen Mantel versehen ist, der die Becherlaufbahn unter Freilassung ihrer unteren Umlenkung konzentrisch umgibt und im Bereich der aufwärts laufenden Becher mit einer Öffnung versehen ist und daß die Schneidvorrichtung durch einen den Mantel konzentrisch umschließenden Schneidkopf mit einer Vielzahl von Schaufeln gebildet ist. Durch diese Maßnahmen werden die Becher sowie die Kettenführungen von den Belastungen aus der Vorschubbewegung weitestgehend befreit.

Ferner wird erreicht, daß die Becher des Becherwerkes nur eine schöpfende Funktion erhalten, wogegen die Schneidkräfte durch ein unabhängiges Element aufgenommen werden, das gleichzeitig das Schüttgut dem Becherwerk zuführt und das so angeordnet ist, daß die Schneidkräfte zum Lösen des Schüttgutes und die Kräfte aus der Vorschubbewegung unmittelbar in die Tragkonstruktion des Becherwerkes abgeleitet werden. Dieses Element ist der angetriebene Schneidkopf, dessen Schaufeln das Schüttgut unabhängig von der Vorschubrichtung der Tragkonstruktion schneiden und vor die Öffnung des feststehenden zylindrischen Mantels fördern, der von dem rotierenden Schneidkopf umgeben ist.

In der Zeichnung ist ein Ausführungsbeispiel des Erfindungsgegenstandes dargestellt und zwar zeigen

Fig. 1 einen senkrechten Schnitt durch das untere Ende des Becherwerkes quer zu den Achsen der Umlenkscheiben,

Fig. 2 einen senkrechten Schnitt nach der Linie II-II in Fig. 1,

Fig. 3 eine Draufsicht von Fig. 2, um 90° verdreht und

Fig. 4 eine Unteransicht von Fig. 1.

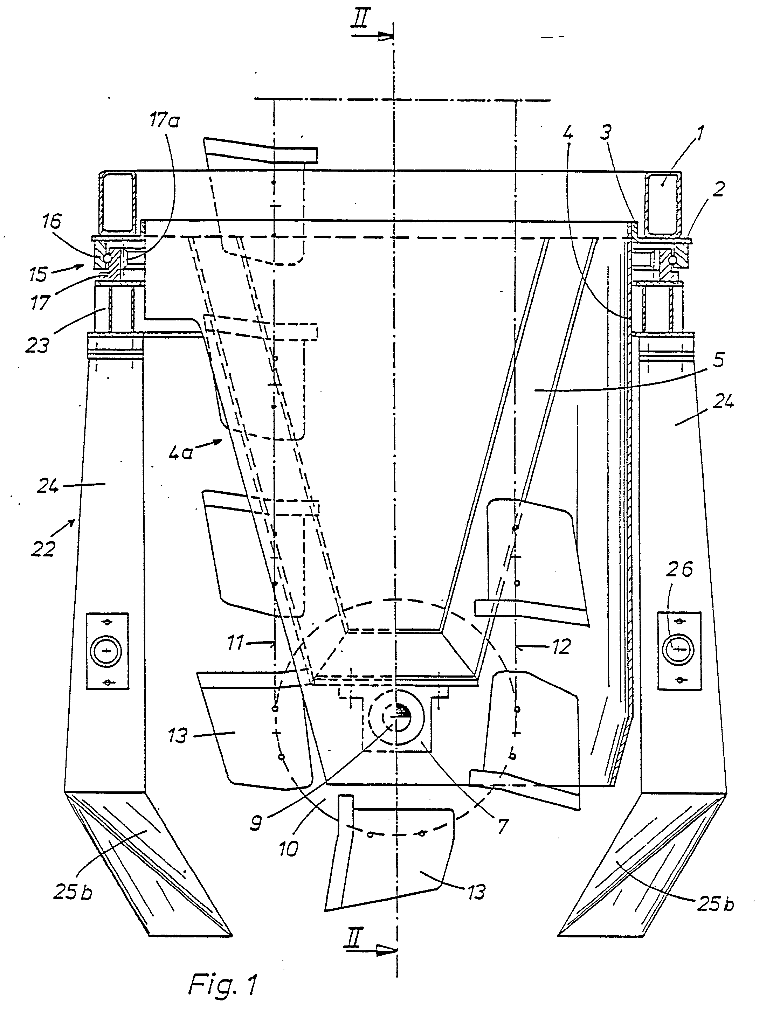

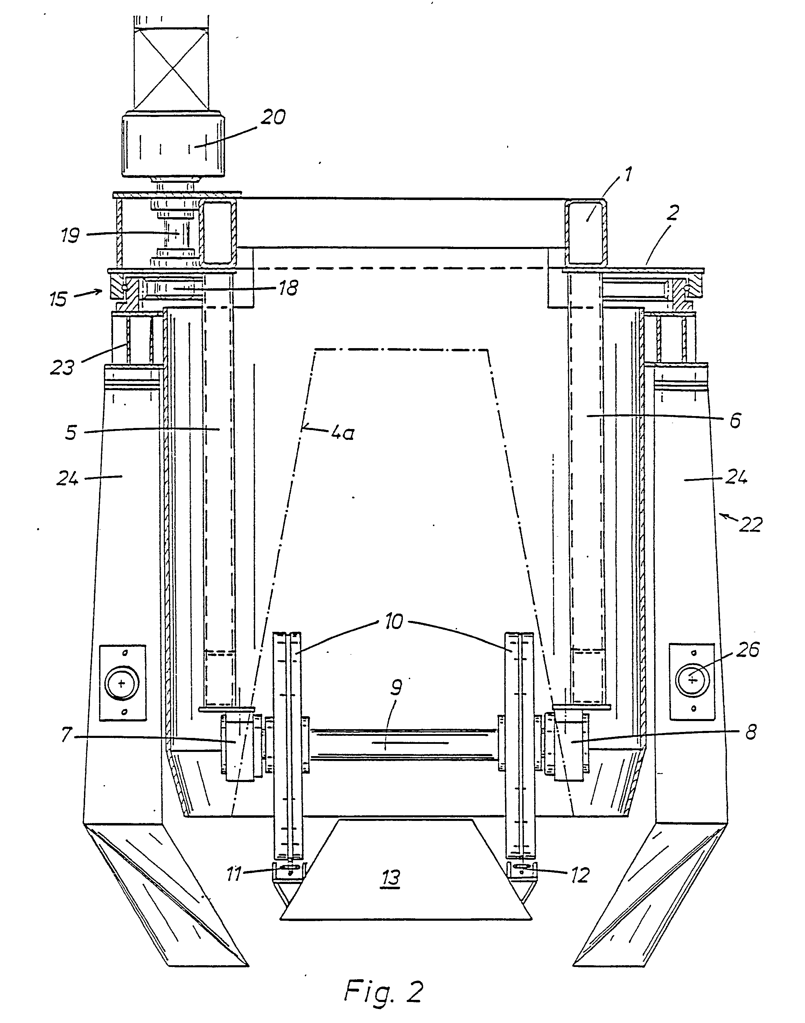

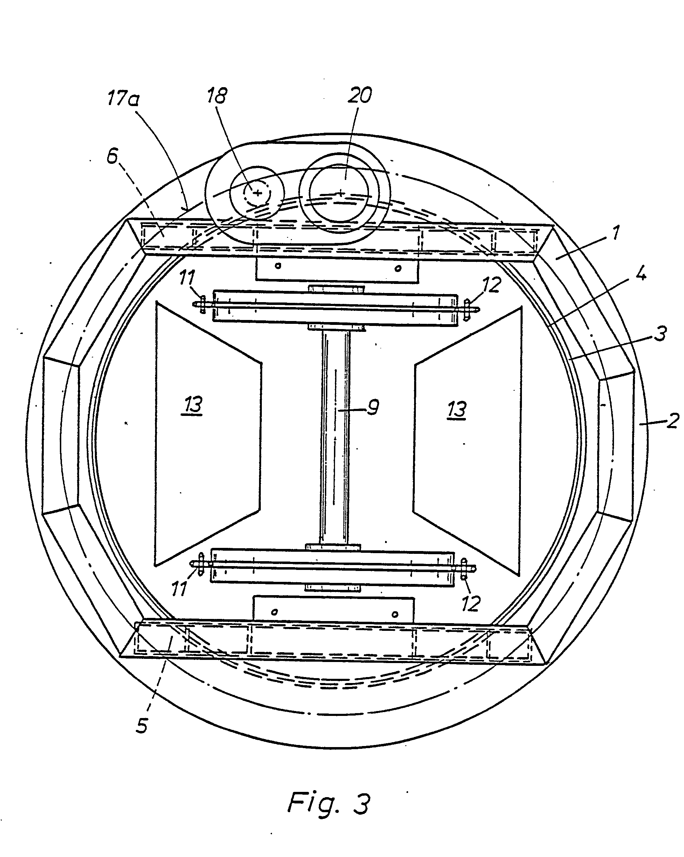

Der aus Figur 1, 2 und 3 ersichtliche obere Verbindungsrahmen 1 gehört zu dem nicht dargestellten oberen Teil der Tragkonstruktion des Becherwerkes und trägt alle Teile der erfindungsgemäßen Konstruktion einschließlich der unteren Umlenkscheiben 10 für die die Becher 13 tragenden Ketten 11, 12. Unterhalb des Verbindungsrahmens 1 befindet sich eine Ringscheibe 2, die am kreisförmigen Innenrand einen Tragring 3 trägt, an dem der oberer Rand eines feststehenden zylindrischen Mantels 4 befestigt ist, der die Becher-Laufbahnen unter Freilassung der. unteren Umlenkung umgibt wie Fig. 1 zeigt. Der Mantel 4 ist im Bereich der aufwärts laufenden Becher 13 aufgeschnitten, so daß hier eine Öffnung 4a entsteht, deren Umriß in Fig. 2 gestrichelt dargestellt ist, da die Öffnung 4a vor der Zeichenebene liegt. Die abwärts laufenden Becher 13 sind also innerhalb des Mantels 4 gegenüber dem Schüttgut abgedeckt, wogegen die aufwärts laufenden Becher im Bereich der Öffnung 4a das Schüttgut aufnehmen können.

Von dem Tragring 2 aus erstrecken sich Tragbügel 5, 6 in das Innere des Mantels 4 zum Tragen der Lagerböcke 7, 8 für die untere Welle 9 eines Paares von Umlenkscheiben 10, über die die Ketten 11, 12 laufen. Die obere Umlenkung der Ketten befindet sich in dem nicht dargestellten oberen Teil der Tragkonstruktion des Becherwerkes.

Am äußeren Rand des Tragringes 3 ist eine allgemein mit 15 bezeichnete Kugeldrehverbindung befestigt, die den drehbaren Schneidkopf 22 trägt. Die Kugeldrehverbindung 15 umfaßt einen feststehenden oberen Ring 16 und einen drehbaren unteren Ring 17, die über einen Kranz von Kugeln axial unverschieblich miteinander gekuppelt sind.

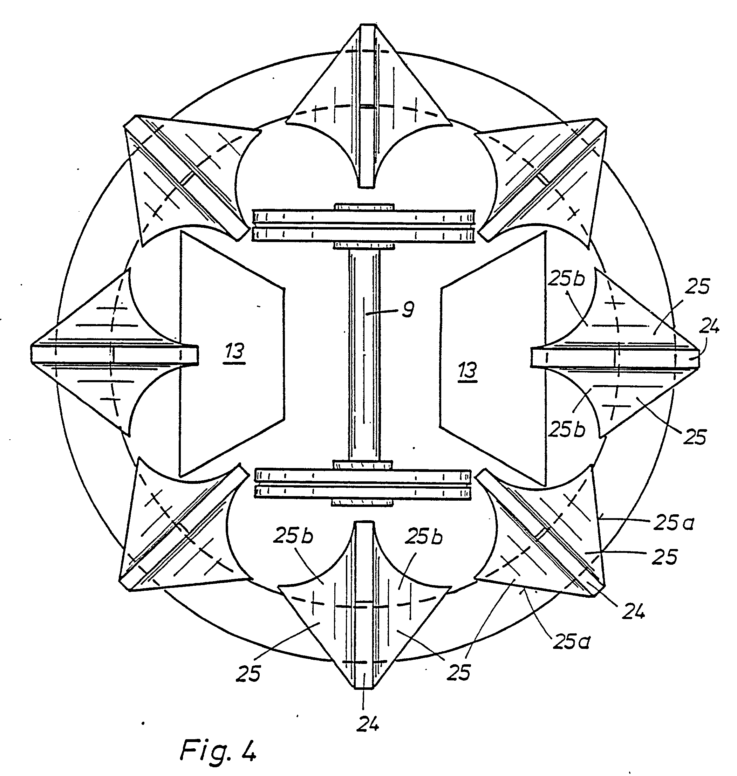

Der untere Ring 17 ist mit einer Innenverzahnung 17a versehen, mit der ein Antriebsritzel 18 (Fig. 2) im Eingriff ist. Das Antriebsritzel 18 ist über eine Antriebswelle 19 von einem Getriebemotor 20 angetrieben, der im Ausführungsbeispiel reversierbar ist wie noch erläutert wird. Der rotierende Schneidkopf 22 ist über einen Zwischenring 23 an den drehbaren unteren Ring 17 der Kugeldrehverschiebung 15 angeschlossen. Von dem Zwischenring 23 erstrecken sich umfangsverteilte Radialstege 24 (Fig. 1 und 4) nach unten, die jeweils beiderseits gekrümmte und gewundene Schaufeln 5 tragen, so daß divergierende Schneiden 25a entstehen. Aus diesem Grunde ist der Schneidkopf 22 im Ausführungsbeispiel reversierbar angetrieben, um Schüttgut bei jeder Drehrichtung zu schneiden und vor die Öffnung 4a des feststehenden Mantels 4 zu transportieren.

Wie Fig. 1 und 2 zeigen, haben die Schaufeln 25 nach innen reichende Verlängerungen 25b, die bis unter den unteren Rand des zylindrischen Mantels 4 reichen und zwar bis unterhalb des in unterster Lage befindlichen Bechers 13.

Alle Radialstege 24 und Schaufeln 25 sind von einem Stabilisierungsring 26 durchsetzt, der mit den Radialstegen durch Schweißen verbunden ist. Auf diese Weise ist der Schneidkopf 22 als biege- und verwindungssteifer Korb ausgebildet, um die Schneid- und Transportkräfte verformungsfrei aufzunehmen. Die Schaufeln 25 sind mit den Radialstegen lösbar verbunden, da sie in Anpassung an das jeweilige Schüttgut zweckmäßig ausgewechselt werden.

Wenn das Becherwerk gemäß der Erfindung mit seinem in der Zeichnung dargestellten unteren Schneidkopf-Ende in das Schüttgut eingetaucht wird, schneiden die Schneiden 25a der Schaufeln 25 das Schüttgut und transportieren es vor die Öffnung 4a des Mantels 4, wo es von den aufsteigenden Bechern 13, geschöpft wird. Diese Wirkungsweise ist unabhängig von jeder Vorschubbewegung des Becherwerkes.

Es ist also nicht mehr erforderlich, dach einem Hingang eines seitlichen Vorschubes das gesamte Becherwerk um 180° zu drehen, wenn z. B. eine Ladeluke im Zickzack-Vorschub ausgeräumt werden soll. Das Becherwerk gemäß der Erfindung ist auch hier in der Lage, einen Silo ohne wesentliche seitliche Vorschubbewegungen, d. h. im wesentlichen nur durch einen Vorschub zu entleeren, da das den Schneidkopf umgebende Schüttgut stets vor die Öffnung 4a des Mantels 4 verbracht wird, wenn es sich um fließfähiges Schüttgut handelt.

Da alle Schneidkräfte von dem rotierenden Schneidkopf aufgebracht und unmittelbar über die Kugeldrehverbindung 15 in die Tragkonstruktion des Becherwerkes übergeleitet werden, sind die Becher 13 und ihre Führungen (Teile 7-12) entlastet. Die Becher 13 haben nur noch eine schöpfende und nicht mehr eine schneidende Funktion.

**Patentansprüche**

1. Bewegliches Becherwerk zur senkrechten oder geneigten Aufnahme und Förderung von Schüttgütern aus Schiffen oder von Lagerplätzen, mit einer Tragkonstruktion für die Umlenkscheiben (10) der die umlaufenden Becher (13) tragenden Ketten (11, 12), wobei die Becher das Schüttgut während einer Vorschubbewegung der Tragkonstruktion aufnehmen, sowie mit einer drehantreibbar an der Tragkonstruktion gelagerten, radial gerichtete Schaufeln (25) aufweisenden Schneidvorrichtung, dadurch gekennzeichnet, daß das untere Aufnahme-Ende der Tragkonstruktion mit einem feststehenden zylindrischen Mantel (4) versehen ist, der die Becherlaufbahn unter Freilassung ihrer unteren Umlenkung konzentrisch umgibt und im Bereich der aufwärts laufenden Becher (13) mit einer Öffnung (4a) versehen ist und daß die Schneidvorrichtung durch einen den Mantel (4) konzentrisch umschließenden Schneidkopf (22) mit einer Vielzahl von Schaufeln (25) gebildet ist.

2. Becherwerk nach Anspruch 1, dadurch gekennzeichnet, daß die Schaufeln (25) des Schneidkopfes (22) bis unterhalb des feststehenden Mantels (4) reichen.

3. Becherwerk nach Anspruch 2, dadurch gekennzeichnet, daß die Schaufeln (25) nach innen reichende Verlängerungen (25b) aufweisen.

4. Becherwerk nach Anspruch 1, 2 oder 3, dadurch gekennzeichnet, daß Schaufeln mit divergierend gerichteten Schneiden (25a) versehen sind und der Schneidkopf (22) reversierbar angetrieben ist.

5. Becherwerk nach Anspruch 1, dadurch gekennzeichnet, daß die Tragkonstruktion (1, 2) einen Tragring (3) aufweist an dem der feststehende Mantel (4) befestigt ist und daß mit der Tragkonstruktion der obere Ring (16) einer Kugeldrehverbindung (15) verbunden ist, von deren unterem Ring (17) der Schneidkopf (22) getragen ist.

6. Becherwerk nach Anspruch 5, dadurch gekennzeichnet, daß der untere Ring (17) der Kugeldrehverbindung (15) mit einer Verzahnung (17a) versehen ist, in die ein Antriebsritzel (18) eines Antriebsmotors (20) eingreift.

7. Becherwerk nach Anspruch 5, dadurch gekennzeichnet, daß der Schneidkopf (22) als biege- und verwindungssteifer Korb ausgebildet ist, bestehend aus einem mit dem unteren Ring (17) verbundenen Zwischenring (23), mit dem Zwischenring verbundenen umfangsverteilten Radialstegen (24) als Träger für die Schaufeln (25) sowie einem unteren Stabilisierungs-Ring (26), der die Radialstege sowie die Schaufeln durchsetzt und mit den Radialstegen verschweißt ist, an denen die Schaufeln lösbar befestigt sind.

## Claims

1. Mobile bucket escavator for vertical or inclined picking-up and conveying of bulk goods from ships or storage places with a supporting construction for the head pulleys (10) in which the chains (11 and 12) run, these chains carrying the circulating buckets (13), whereby the buckets take up the bulk material during a feed movement of the supporting construction, as well as with a pivot-and-drive mounted radial directed shovels (25) with cutting facility mounted on the supporting construction, characterized in that the bottom mounting end of the supporting construction is provided with a stationary cylindrical jacket (4), which concentrically surrounds the bucket track leaving its bottom pulley free and which is provided in the region of the upwards travelling buckets (13) with an opening (4a) and that the cutting facility is formed by a cutting head (22) concentrically enclosing the jacket with a number of shovels (25).

2. Bucket elevator according to Claim 1, characterized in that the shovels (25) of the cutting head (22) extend to below the fixed jacket (4).

3. Bucket elevator according to Claim 2, characterized in that the shovels (25) have sufficient extensions (25b) to the inside.

4. Bucket elevator according to Claim 1, 2 or 3, characterized in that the buckets are provided with diverging blades (25a) and that the cutting head (22) is reversibly driven.

5. Bucket elevator according to Claim 1, characterized in that the supporting construction (1, 2) has a supporting ring (3) on which the fixed jacket (4) is fastened and that a ball slewing gear (15) is connected with the supporting construction of the top ring (16), the cutting head (22) being carried by its bottom ring (17).

6. Bucket conveyor according to Claim 5, characterized in that the bottom ring (17) of the ball slewing gear (15) is provided with a gear tooth system (17a) in which a drive pinion (18) of a drive motor (20) meshes.

7. Bucket elevator according to Claim 5, characterized in that the cutting head (22) is formed as distortion-free and non-bending basket comprising an intermediate ring (23) connected with the bottom ring (17), with the circumferentially distributed radial bridges (24) connected with the intermediate ring as supports for the shovels (25) as well as a stabilizing ring (26) which intersperses the radial bridges and the shovels and is welded to the radial bridges on which the shovels are removably fastened.

## Revendications

1. Convoyeur mobile à godets pour recevoir et transporter verticalement ou de façon inclinée des matériaux en vrac depuis des navires ou des emplacements d'entreposage, comprenant une construction de support pour les poulies de renvoi (10) des chaînes (11, 12) supportant les godets (13) en circulation, les godets recevant le matériau en vrac pendant un mouvement d'avance de la construction de support, ainsi qu'un dispositif de coupe qui est supporté de manière à pouvoir être entraîné en rotation sur la construction de support et qui présente des pales (25) orientées radialement, caractérisé en ce que l'extrémité de récolte inférieure de la construction de support présente une enveloppe cylindrique fixe (4) qui entoure de manière concentrique la voie de déplacement des godets, tout en laissant libre son changement de direction inférieur, et qui, dans la zone des godets (13) ascendants, est pourvue d'une ouverture (4a) et en ce que le dispositif de coupe est formé par une tête de coupe (22) qui entoure de manière concentrique l'enveloppe (4) et qui comporte un grand nombre de pales (25).

2. Convoyeur à godets suivant la revendication 1, caractérisé en ce que les pales (25) de la tête de coupe (22) vont jusqu'en dessous de l'enveloppe fixe (4).

3. Convoyeur à godets suivant la revendication 2, caractérisé en ce que les pales (25) présentent des prolongements (25b) dirigés vers l'intérieur.

4. Convoyeur à godets suivant l'une des revendications 1, 2 et 3, caracterisé en ce que des pales sont pourvues de couteaux (25a) orientés de manière divergente et en ce que la tête de coupe (22) est entraînée de manière réversible.

5. Convoyeur à godets suivant la revendication 1, caractérisé en ce que la construction de support (1, 2) présente un anneau de support (3) sur lequel est fixée l'enveloppe fixe (4) et en ce que l'anneau supérieur (16) d'un assemblage pivotant à billes (15), par l'anneau inférieur (17) duquel la tête de coupe (22) est supportée, est relié à la construction de support.

6. Convoyeur a godets suivant la revendication 5, caractérisé en ce que l'anneau inférieur (17) de l'assemblage pivotant à billes (15) est pourvu d'une denture (17a) dans laquelle entre en prise un pignon d'entraînement (18) d'un moteur d'entraînement (20).

7. Convoyeur à godets suivant la revendication 5, caractérisé en ce que la tête de coupe (22) est réalisée sous la forme d'une corbeille rigide à la flexion et à la torsion, qui est constituée d'un anneau intercalaire (23) relié à l'anneau inférieur (17), de nervures radiales (24) réparties sur la périphérie et reliées à l'anneau intercalaire, comme supports pour les pales (25), ainsi que d'un anneau de stabilisation inférieur (26), qui traverse les nervures radiales ainsi que les pales et est soudé aux nervures radiales sur lesquelles les pales sont fixées de manière détachable.

Fig. 1

Fig. 2

Fig. 3

Fig. 4